# EUROPÄISCHE PATENTANMELDUNG

(11) **EP 0 963 876 A2**
(43) Veröffentlichungstag der Anmeldung: **15.12.1999**
(21) Anmeldenummer: 99109871.6
(22) Anmeldetag: 19.05.1999
(51) Int. Cl.: B60R 16/02

(54) **Verfahren zum Zuweisen einer auswählbaren Möglichkeit zu einem Stellmittel**

(30) Priorität: 09.06.1998 DE 19825760
(71) Anmelder: NOKIA MOBILE PHONES LTD., 02150 Espoo (FI)
(72) Erfinder: Görtz, Udo, 44797 Bochum (DE); Theimer, Wolfgang, 44795 Bochum (DE)
(74) Vertreter: TER MEER STEINMEISTER & PARTNER GbR

(57) **Zusammenfassung**

Verfahren zum Zuweisen einer auswählbaren Möglichkeit zu einem Stellmittel, bei dem eine sprachunterstützte Steuereinrichtung aktiviert wird, um dem Stellmittel eine auswählbare Möglichkeit auf einen Auswahlbefehl hin zuzuweisen. Um einen Benutzer beim Auswählen einer zuzuweisenden Möglichkeit zu dem Stellmittel zu unterstützen ist vorgesehen, daß nach dem Aktivieren der sprachunterstützten Steuereinrichtung die auswählbaren Möglichkeiten angesagt werden können, die aktuell verfügbar sind.

## Beschreibung

Die Erfindung betrifft ein Verfahren zum Zuweisen einer auswählbaren Möglichkeit zu einem Stellmittel nach dem Oberbegriff des Anspruchs 1.

Bei Systemen mit einem oder mehreren elektrischen oder elektronischen Geräten, bei denen mehr Einstell- oder Bedienungsfunktionen als Stellmittel dafür vorgesehen sind, werden üblicherweise einem Stellmittel zwei oder mehr Funktionen zugewiesen, die dann durch eine entsprechende Betätigungsmodalität ausgeführt werden können. Ist beispielsweise bei einem Kraftfahrzeugradio zum Einstellen der Loudness und der Balance nur ein Wippschalter oder Jog Dial vorgesehen, um die beiden Größen einzustellen so ist üblicherweise ein Zuweisungsknopf vorgesehen, so daß durch einmal Drücken dem Wippsteller die Einstellung der Loudness und durch zweimal Drücken die Einstellung der Balance zugeordnet wird.

Problematisch wird diese Art der Zuordnung einer Bedienungsfunktion zu einem Stellmittel dann, wenn eine Vielzahl von Bedienungsfunktionen einem oder wenigen Stellmitteln zuzuweisen sind.

Bei einem bekannten Bediensystem (DE 196 08 869 C2) ist eine Sprachbedieneinrichtung vorgesehen, mit deren Hilfe einem manuell bedienbaren Betätigungsmittel eine aus einer Vielzahl von Bedienungsfunktionen ausgewählte Bedienungsfunktion zugewiesen werden kann. Hierzu wird die Sprachbedieneinrichtung durch Drücken des Betätigungsmittels aktiviert, so daß der Benutzer mit einem entsprechenden vordefinierten Sprachbefehl die gewünschte Bedienungsfunktion auswählen kann, die dann von der Sprachbedieneinrichtung dem Betätigungsmittel zugewiesen wird. Wird das Betätigungsmittel dann vom Benutzer betätigt, so werden die vom Betätigungsmittel erzeugten Signale über die Sprachbedieneinrichtung, z.B. über einen Datenbus, an das entsprechende zu bedienende Gerät geliefert. Eine Rückmeldung über die ausgewählte Bedienungsfunktion und die entsprechend eingestellten Funktionswerte kann dabei haptisch, optisch oder über Sprachausgabemittel akustisch erfolgen.

Außerdem ist bereits ein Sprachsteuersystem bekannt (EP 0 078 016 B1), bei dem einem Betätigungsknopf eine Bedienungsfunktion mittels Sprachbefehl zugewiesen werden kann, nachdem er gedrückt ist. Dabei wird der Betätigungsknopf zum Durchführen der ausgewählten Bedienungsfunktion mit einem zu bedienenden Gerät über entsprechende Schaltermittel verbunden. Wenn der Einstellvorgang beendet ist, verliert der Betätigungsknopf nach Ablauf einer vorgegebenen Zeit die zugewiesene Betätigungfunktion.

Der Erfindung liegt die Aufgabe zugrunde, ein weiteres Verfahren zum Zuweisen einer auswählbaren Möglichkeit zu einem Stellmittel bereitzustellen, das insbesondere einem Benutzer die Auswahl einer zuzuweisenden Möglichkeit erleichtert und damit die Bedienung eines entsprechenden Systems mit mehreren elektrischen oder elektronischen Geräten über nur wenige Stellmittel vereifacht.

Diese Aufgabe wird durch das Verfahren nach Anspruch 1 gelöst. Vorteilhafte Ausgestaltungen der Erfindung sind in den Unteransprüchen beschrieben.

Erfindungsgemäß ist also bei einem Verfahren der eingangs genannten Art vorgesehen, daß nach dem Aktivieren der sprachunterstützten Steuereinrichtung nur die auswählbaren Möglichkeiten angesagt werden können, die aktuell verfügbar sind. Durch den Einsatz des erfindungsgemäßen Verfahrens bei einem System mit mehreren elektrischen oder elektronischen Geräten wird die Bedienung der verschiedenen Geräte dem Benutzer wesentlich erleichtert, da er die Möglichkeit hat, sich durch die Ansage der jeweils auswählbaren Möglichkeiten, also z.B. der auswählbaren Geräte oder sobald ein Gerät ausgewählt ist, der zur Verfügung stehenden Funktionen, bei der Auswahl einer zur Verfügung stehenden Funktion unterstützen zu lassen. Da bei der Ansage nur die jeweils aktuell verfügbaren Wahlmöglichkeiten angesagt werden, läßt sich die Ansage kurz und übersichtlich halten.

Bei einer ersten Ausgestaltung der Erfindung ist vorgesehen, daß die sprachunterstützte Steuereinrichtung durch einen Sprachbefehl aktivierbar ist, der die fortlaufende Ansage der aktuell verfügbaren auswählbaren Möglichkeiten startet, wobei die Auswahl einer aktuell verfügbaren auswählbaren Möglichkeit durch einen Auswahl-Sprachbefehl erfolgt, der unmittelbar nach der Ansage der gewünschten Möglichkeit gesprochen wird. Auf diese Weise läßt sich einem Stellmittel allein mit Sprachbefehlen eine bestimmte Bedienungsfunktion zuweisen.

Um Jedoch auch in einer lauten Umgebung eine zuverlässige Zuweisung einer Bedienungsfunktion zu einem Stellmittel sicherzustellen, kann zusätzlich oder anstelle der Möglichkeit die Auswahl durch einen Sprachbefehl zu bewirken vorgesehen sein, daß die Auswahl einer aktuell verfügbaren auswählbaren Möglichkeit durch ein Stellsignal vom betroffenen Stellmittel erfolgt, das unmittelbar nach der Ansage der gewünschten Möglich-. keit betätigt wird.

Um einem geübten Benutzer die Möglichkeit zu geben, die Zuweisung einer Bedienungsfunktion zum Stellmittel unabhängigvon der Ansage durchzuführen, ist es zweckmäßig, wenn die Auswahl einer aktuell verfügbaren auswählbaren Möglichkeit durch Aussprechen einer der gewünschten Möglichkeit zugewiesenen Bezeichnung jederzeit unabhängig von der Ansage der aktuell verfügbaren auswählbaren Möglichkeiten erfolgen kann.

Eine andere Ausgestaltung der Erfindung zeichnet sich dadurch aus, daß die Auswahl einer aktuell verfügbaren auswählbaren Möglichkeit durch aufeinanderfolgendes Betätigen des betroffenen Stellmittels erfolgt, wobei nach dem Aktivieren der sprachunterstützten Steuereinrichtung durch eine erste Betätigung des Stellmittels jede weitere Betätigung des Stellmittels als Auswahl der jeweils nächsten auswählbaren Möglichkeit gewertet wird. Dabei ist es von Vorteil, wenn nach jeder Betätigung des Stellmittels die dadurch ausgewählte Möglichkeit angesagt wird.

Um hierbei auf die Eingabe eines besonderen Zuweisungssignals verzichten zu können, ist es besonders zweckmäßig, wenn eine ausgewählte Möglichkeit dem Stellmittel zugewiesen wird, wenn eine vorgegebene Zeit nach der letzten Betätigung des Stellmittels abgelaufen ist.

Eine vorteilhafte Weiterbildung der Erfindung zeichnet sich dadurch aus, daß die erfolgte Zuweisung einer Möglichkeit zu einem Stellmittel durch erneute Betätigung des Stellmittels oder durch einen entsprechenden Sprachbefehl aufgehoben werden kann. Hierdurch läßt sich eine Korrektur einer irrtümlich erfolgten Zuweisung einer Bedienungsfunktion zu einem Stellmittel erreichen.

Eine andere vorteilhafte Korrekturmöglichkeit ergibt sich, wenn die erfolgte Zuweisung einer Möglichkeit zu einem Stellmittel durch erneute Betätigung des Stellmittels und gleichzeitiges Aussprechen einer einer anderen gewünschten aktuell verfügbaren auswählbaren Möglichkeit zugeordneten Bezeichnung geändert werden kann.

Die Erfindung wird im folgenden beispielsweise anhand der Zeichnung näher erläutert. Es zeigen:
**Fig. 1** ein vereinfachtes schematisches Blockschaltbild eines Systems elektrischer oder elektronischer Geräte mit einer sprachunterstützten Steuereinrichtung und
**Fig. 2** ein schematisches Ablaufdiagramm eines Ausführungsbeispiels. des erfindungsgemäßen Verfahrens.

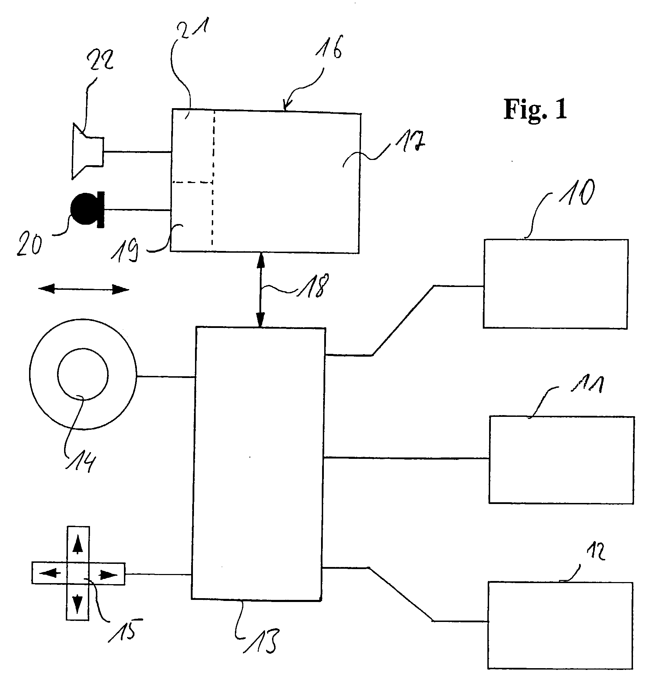

Wie in Figur 1 schematisch dargestellt ist, sind eine Vielzahl elektrischer oder elektronischer Geräte, wie beispielsweise ein Möbiltelefon 10, ein Radio 11 und weitere Geräte 12, wie beispielsweise ein Navigationsgerät, ein Bordcomputer oder dergleichen, über einen steuerbaren Verteilerschalt-. kreis 13 mit einem oder mehreren Stellmitteln, wie beispielsweise einem Dreh-Drück-Steller 14, einem Wippschalter 15 oder Jog Dial oder dergleichen, verbunden. Der Verteilerschaltkreis 13 wird von einer sprachunterstützten Steuereinrichtung 16 so gesteuert, daß jedem Stellmittel 14, 15 wahlweise nacheinander oder verschiedenen Stellmitteln 13, 14 gleichzeitig eines der Geräte 10, 11, 12 sowie eine entsprechende Bedienungsfunktion zugeordnet sein kann. Die sprachunterstützte Steuereinrichtung 16 umfaßt einen Steuerkreis 17, der über eine bidirektionale Leitung 18 mit dem Verteilerschaltkreis 13 verbunden ist, eine Spracherkennungseinrichtung 19, an die ein Mikrophon 20 zur Eingabe von Sprachbefehlen angeschlossen ist, und ein Ansageteil 21, an das ein Lautsprecher 22 zur Ausgabe akustischer Information, insbesondere zur Ansage von den Stellmitteln 14, 15 zuweisbaren Möglichkeiten angeschlossen ist. Der Steuerkreis 17 der sprachunterstützten Steuereinrichtung 16 empfängt neben Sprachbefehl-Signalen von der Spracherkennungseinrichtung 19 auch Betätigungssignale von den einzelnen Stellmitteln 14, 15.

Um die Bedienung einzelner Geräte 10, 11, 12 mit Hilfe eines oder mehrerer der Stellmittel 14, 15 zu ermöglichen, muß zunächst einem ausgewählten Stellmittel, beispielsweise dem Dreh-Drück-Steller 14, das zu bedienende Gerät, also beispielsweise das Radio 11, zugeordnet werden, um dann eine gewünschte Bedienungsfunktion, z.B. Einstellen der Lautstärke, dem Dreh-Drück-Steller 14 zuzuweisen.

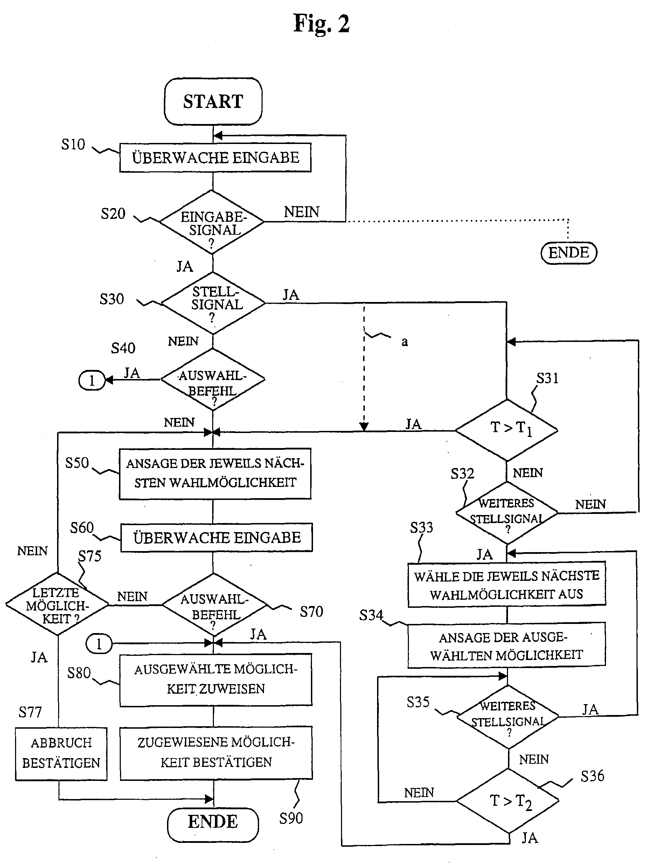

Die verschiedenen Möglichkeiten, einem Stellmittel 14, 15 ein elektrisches oder elektronisches Gerät 10, 11, 12 und/oder eine Bedienungsfunktion mit dem erfindungsgemäßen Verfahren zuzuweisen, werden im folgenden mit Bezug auf Figur 2 beschrieben. Dabei wird weitgehend der DrehDrück-Steller 14 stellvertretend für beliebige der verfügbaren Stellmittel genannt.

Nach dem Einschalten des Systems wird die sprachunterstützte Steuereinrichtung 16 aktiviert und überwacht mit ihrem Steuerkreis 17 die Eingabe von Sprachbefehlen über das Mikrophon 20 und die Spracherkennungseinrichtung 19 und die Eingabe von Betätigungs- oder Stellsignalen, die durch Betätigung der Stellmittel 14, 15 eingegeben werden (Schritt S10). Für die Eingabe von Stellsignalen kann dabei eine andere Art der Betätigung des Stellmittels 14, 15 vorgesehen sein, als für die Ausführung einer zugewiesenen Bedienungsfunktion. Bei dem Dreh-Drück-Steller 14 kann beispielsweise das Drücken für die Eingabe eines Stellsignals zur Durchführung des erfindungsgemäßen Verfahrens vorgesehen sein, während das Drehen zur Parametereinstellung entsprechend einer zugewiesenen Bedienungsfunktion genutzt wird. Entsprechend kann bei dem Wippschalter 15 eine bei der Ausführung einer zugewiesenen Bedienungsfunktion nicht auftretenden Betätigung, also beispielsweise die gleichzeitige Betätigung entgegengesetzter Wippteile, für die Erzeugung eines Stellsignals genutzt werden.

Danach wird im Schritt S20 überprüft, ob ein Eingabesignal vorliegt. Falls nicht, so wird üblicherweise im Schritt S10 mit der Überwachung der Eingabe fortgefahren. Es ist jedoch auch möglich, das Verfahren hier abzubrechen, wie in Figur 2 durch die gestrichelte Linie angedeutet ist, und nach einer gewissen Wartezeit erneut zu starten.

Liegt ein Eingabesignal vor, so wird im Schritt S30 überprüft, ob es sich hierbei um ein vom Dreh-Drück-Steller 14 geliefertes Stellsignal handelt.

Ist dies der Fall, so kann unmittelbar im Schritt S50 mit der Ansage der jeweils nächsten aktuell verfügbaren auswählbaren Möglichkeit begonnen werden, wie durch die gestrichelte Linie a angedeutet ist. Bevorzugt ist es jedoch, daß zunächst im Schritt S31 überprüft wird, ob die Zeit T seit dem Auftreten des Stellsignals größer ist als eine vorgegebene Wartezeit T₁. Ist dies nicht der Fall, so wird im Schritt S32 überprüft, ob ein weiteres Stellsignal aufgetreten ist. Ist dies auch nicht der Fall, so wird die Wartezeit T₁ abgewartet, um dann im Schritt S50 mit der Ansage derjeweils nächsten aktuell verfügbaren Möglichkeit zu beginnen.

Wurde jedoch im Schritt S32 ein weiteres Stellsignal festgestellt, wurde also der Dreh-Drück-Steller 14 erneut gedrückt, so wird dadurch im Schritt S33 die jeweils nächste Wahlmöglichkeit ausgewählt, also bei der ersten zusätzlichen Betätigung die erste aktuell zur Verfügung stehende Wahlmöglichkeit. Im Schritt S34 kann dann die ausgewählte Wahlmöglichkeit angesagt werden. Auf diese Ansagemöglichkeit könnte jedoch auch verzichtet werden, so daß unmittelbar nach dem Schritt S33 im Schritt S35 überprüft wird, ob wieder ein weiteres Stellsignal vorliegt. Ist dies der Fall, so wird erneut im Schritt S33 die nächste Wahlmöglichkeit ausgewählt, um dann nach Ansage der nun ausgewählten Wahlmöglichkeit im Schritt S34 im Schritt S35 erneut festzustellen, ob ein neues Stellsignal vorliegt. Ist dies nicht der Fall, so wird im Schritt S36 überprüft, ob eine zweite Wartezeit T₂ abgelaufen ist. Sobald dies der Fall ist, wird im Schritt S80 die ausgewählte Möglichkeit dem Dreh-Drück-Steller 14 zugewiesen. Damit ist die Zuweisung einer auswählbaren Möglichkeit zum Dreh-Drück-Steller 14 oder einem anderen Stellmittel mit Hilfe des Stellmittels selbst und gegebenenfalls mit unterstützender Ansage der jeweils ausgewählten Möglichkeit beendet. Zweckmäßigerweise wird jedoch noch im Schritt S90 die zugewiesene Möglichkeit beispielsweise durch eine entsprechende Ansage oder optische Anzeige oder beides bestätigt.

Auf die hier beschriebene Weise ist es für einen Benutzer, der in der Handhabung des Systems mit mehreren elektrischen oder elektronischen Geräten geübt ist, möglich, durch mehrfaches aufeinanderfolgendes Drücken des Dreh-Drück-Stellers 14 ein gewünschtes Gerät oder eine gewünschte Bedienungsfunktion auszuwählen.

Will der Benutzer also beispielsweise dem Dreh-Drück-Steller 14 zunächst das Radio 11, das die zweite auswählbare Möglichkeit unter den elektrischen oder elektronischen Geräten darstellt, auswählen, so drückt er den Dreh-Drück-Steller 14 drei Mal, das erste Mal, um die sprachunterstützte Steuereinrichtung 16 zu aktivieren und die beiden folgenden Male um entsprechend den Schritten S32, S33, S34, S35 und S36 das Radio 11 auszuwählen.

Erfolgt jedoch das zweite Drücken des Dreh-Drück-Stellers 14 nicht oder nicht innerhalb der Wartezeit T₁, so wird im Schritt S50 mit der Ansage der jeweils nächsten aktuell verfügbaren Wahlmöglichkeit begonnen. Nach der Ansage einer Wahlmöglichkeit wird dann im Schritt S60 erneut die Eingabe überwacht, um im Schritt S70 festzustellen, ob ein Auswahlbefehl vorliegt.

Als Auswahlbefehl kann hierbei wiederum ein vom Dreh-Drück-Steller 14 erzeugtes Stellsignal dienen, das von einem Benutzer durch unmittelbar nach der Ansage einer gewünschten Möglichkeit erfolgtes Drücken des Dreh-Drück-Stellers 14 erzeugt wurde, um die unmittelbar vorher angesagte Möglichkeit auszuwählen. Hierdurch läßt sich auch in einer geräuschvollen Umgebung eine zuverlässige Auswahl ermöglichen.

Daneben dient jedoch als Auswahlbefehl auch ein Sprachbefehl, der über das Mikrophon 20 und die Spracherkennungseinrichtung 19 eingegeben werden kann. Dabei kann als Auswahlbefehl beispielsweise ein Befehlswort, wie z.B. "Auswählen" oder dergleichen, verwendet werden, das dann ebenfalls unmittelbar nach der Ansage der gewünschten Möglichkeit gesprochen wird.

Darüber hinaus kann wahlweise oder zusätzlich vorgesehen sein, daß zur Auswahl einer gewünschten Möglichkeit die Bezeichnung dieser Möglichkeit, also der Name des auszuwählenden Geräts oder der gewünschten Bedienungsfunktion, ausgesprochen wird. Hierbei kann die Bezeichnung entweder unmittelbar nach der entsprechenden Ansage oder auch zu irgendeinem beliebigen Zeitpunkt während der fortdauernden Ansage der jeweils nächsten Wahlmöglichkeit erfolgen. Hier besteht für den ungeübten Benutzer die Möglichkeit, sich zunächst von der Ansage über die verfügbaren Möglichkeiten zu informieren, und dann die gewünschte Auswahl durch Aussprechen der Bezeichnung der gewählten Bedienungsfunktion zu treffen.

Soll die Auswahl einer Möglichkeit mit Hilfe einer entsprechenden Bezeichnung erfolgen, so ist es auch möglich, anstelle einer vom System vorgegebenen Bezeichnung eine benutzerdefinierte Bezeichnung der entsprechenden Möglichkeit zu verwenden.

Wird im Schritt S70 festgestellt, daß kein Auswahlbefehl vorliegt, so wird im Schritt S75 überprüft, ob die zuletzt angesagt Möglichkeit die letzte der aktuell verfügbaren auswählbaren Möglichkeiten war. Ist dies nicht der Fall, wird mit der fortlaufenden Ansage im Schritt S50 fortgefahren, während nach Erreichen der letzten Möglichkeit die Ansage beendet und im Schritt S77 der Abbruch des Verfahrens bestätigt wird. Im Schritt S75 kann dabei noch überprüft werden, ob die verfügbaren Möglichkeiten zum ersten, zweiten oder n-ten Mal angesagt wurden, um die Ansage erst dann zu beenden, wenn alle Möglichkeiten mehrfach angesagt wurden.

Liegt jedoch im Schritt S70 ein Auswahlbefehl vor, so wird wiederum im Schritt S80 die ausgewählte Möglichkeit dem Stellelement zugewiesen, die zugewiesene Möglichkeit bestätigt und dann das Verfahren beendet.

Liegt im Schritt S30 jedoch kein Stellsignal vom Stellmittel 14, 15 vor, so wird im Schritt S40 überprüft, ob das Eingabesignal ein gesprochenes Startsignal, das dann gleichzeitig eines der zur Verfügung stehenden Steilmittel auswählt, oder eine unmittelbar als Auswahlbefehl dienende Bezeichnung eines dem Stellmittel 14, 15 zuzuordnenden Geräts oder einer dem Stellmittel zuzuordnenden Bedienungsfunktion ist. Im letzteren Fall, also wenn ein unmittelbar verwendbarer Auswahlbefehl vorliegt, überspringt das Verfahren die fortlaufende Ansage In den Schritten S50 bis S75 um unmittelbar die ausgewählte Möglichkeit im Schritt S80 zuzuweisen und im Schritt S90 die zugewiesene Möglichkeit zu bestätigen. Ansonsten wird die fortlaufende Ansage der aktuell zur Verfügung stehenden Möglichkeiten wie beschrieben durchgeführt.

Wurde dem Dreh-Drück-Steller 14 auf die beschriebene Weise beispielsweise das Radio 11 zugeordnet, so wird nach Beendigung dieser Zuordnung das erfindungsgemäße Verfahren erneut durchgeführt, um dem Dreh-Drück-Steller 14 nun eine entsprechende Bedienungsfunktion zuzuweisen.

Anstelle dieser zweistufigen Vorgehensweise ist es durch entsprechende Strukturierung der Wahlmöglichkeiten auch möglich, mit einer einzigen Auswahl unmittelbar einem Stellmittel 14, 15 die Bedienungsfunktion und das entsprechende Gerät 10, 11, 12 zuzuweisen.

Nach dem Auswählen der gewünschten Bedienungsfunktion kann der Benutzer die von ihm gewünschten Einstellungen durchführen. Nach Beendigung des Einstellens wird nach Ablauf einer entsprechenden Wartezeit, beispielsweise nach fünf oder zehn Sekunden die Zuweisung der Bedienungsfunktion aufgehoben. Die Zuweisung der Bedienungsfunktion wird auch dann nach Ablauf dieser Wartezeit aufgehoben, wenn vom Benutzer keine Einstellungen vorgenommen werden.

Um bei der irrtümlichen Auswahl einer nicht gewünschten Bedienungsfunktion nicht unbedingt die Wartezeit bis zum automatischen Aufheben der Zuweisung abwarten zu müssen, kann eine entsprechende Löschfunktion vorgesehen sein, mit deren Hilfe erreicht wird, daß dem Stellmittel 14, 15 schnell eine neue Bedienungsfunktion zugewiesen werden kann. Hierzu kann beispielsweise eine erneute Betätigung des Stellmittels 14, 15 nach der Auswahl einer Bedienungsfunktion oder ein entsprechender Sprachbefehl, z.B. "Löschen" oder "Andere Bedienungsfunktion einstellen" vorgesehen sein. Eine weitere Möglichkeit besteht darin, daß gleichzeitig mit dem Betätigen des entsprechenden Stellmittels 14, 15 die gewünschte Bedienungsfunktion eingestellt wird, so daß die vorherige Zuweisung einer Bedienungsfunktion aufgehoben wird.

Wenn eine derartige Löschfunktion vorgesehen ist, ist es nicht notwendigerweise erforderlich, die Zuweisung automatisch aufzuheben, so daß das Stellmittel ständig bereit ist, die zugewiesene Bedienungsfunktion auszuführen.

Das erfindungsgemäße Verfahren zum Zuweisen einer auswählbaren Möglichkeit zu einem Stellmittel läßt sich auch dann einsetzen, wenn bei einem System für eine Vielzahl von elektrischen oder elektronischen Geräten 10, 11, 12 mehrere gleiche oder unterschiedliche Stellmittel 14, 15 vorgesehen sind. Zweckmäßigerweise wird dabei als ein die sprachunterstützte Steuereinrichtung 16 aktivierendes Eingabesignal ein das entsprechende Stellmittel 14, 15 individualisierendes Signal verwendet. Im einfachsten Fall ist dies ein durch Betätigen des Stellmittels erzeugtes Stellsignal. Es kann jedoch auch ein Sprachbefehl, wie beispielsweise "linker Knopf", "mittlerer Knopf" oder "rechter Knopf", sein, um z.B. drei DrehDrück-Steller 14 zu unterscheiden.

Das erfindungsgemäße Verfahren gibt also einem Benutzer die Möglichkeit, selbst zu entscheiden, ob er von der Möglichkeit gebrauch macht, sich bei der Bedienung des Systems durch die Ansage der zur Verfügung stehenden Geräte unterstützen zu lassen, oder nicht.

## Patentansprüche

1. Verfahren zum Zuweisen einer auswählbaren Möglichkeit zu einem Stellmittel (14, 15), bei dem eine sprachunterstützte Steuereinrichtung (16) aktiviert wird, um dem Stellmittel (14, 15) eine auswählbare Möglichkeit auf einen Auswahlbefehl hin zuzuweisen, **dadurch gekennzeichnet**, daß nach dem Aktivieren der sprachunterstützten Steuereinrichtung (16) die auswählbaren Möglichkeiten angesagtwerden können, die aktuell verfügbar sind.

2. Verfahren nach Anspruch 1, **dadurch gekennzeichnet**, daß die sprachunterstützte Steuereinrichtung (16) durch einen Sprachbefehl aktivierbar ist, der die fortlaufende Ansage der aktuell verfügbaren auswählbaren Möglichkeiten startet.

3. Verfahren nach Anspruch 2, **dadurch gekennzeichnet**, daß die Auswahl einer aktuell verfügbaren auswählbaren Möglichkeit durch einen Auswahl-Sprachbefehl erfolgt, der unmittelbar nach der Ansage der gewünschten Möglichkeit gesprochen wird.

4. Verfahren nach Anspruch 2 oder 3, **dadurch gekennzeichnet**, daß die Auswahl einer aktuell verfügbaren auswählbaren Möglichkeit durch ein Stellsignal vom betroffenen Stellmittel erfolgt, das unmittelbar nach der Ansage der gewünschten Möglichkeit betätigt wird.

5. Verfahren nach Anspruch 2, 3 oder 4, **dadurch gekennzeichnet**, daß die Auswahl einer aktuell verfügbaren auswählbaren Möglichkeit durch Aussprechen einer der gewünschten Möglichkeit zugewiesenen Bezeichnung jederzeit unabhängig von der Ansage der aktuell verfügbaren auswählbaren Möglichkeiten erfolgen kann.

6. Verfahren nach Anspruch 1, **dadurch gekennzeichnet**, daß die Auswahl einer aktuell verfügbaren auswählbaren Möglichkeit durch aufeinanderfolgendes Betätigen des betroffenen Stellmittels (14, 15) erfolgt.

7. Verfahren nach Anspruch 6, **dadurch gekennzeichnet**, daß nach dem Aktivieren der sprachunterstützten Steuereinrichtung (16) durch eine erste Betätigung des Stellmittels (14, 15) jede weitere Betätigung des Stellmittels (14, 15) als Auswahl der jeweils nächsten auswählbaren Möglichkeit gewertet wird.

8. Verfahren nach Anspruch 7, **dadurch gekennzeichnet**, daß nach jeder Betätigung des Stellmittels (14, 15) die dadurch ausgewählte Möglichkeit angesagt wird.

9. Verfahren nach Anspruch 6, 7 oder 8, **dadurch gekennzeichnet**, daß eine ausgewählte Möglichkeit dem Stellmittel zugewiesen wird, wenn eine vorgegebene Wartezeit (T₂) nach der letzten Betätigung des Stellmittels (14, 15) abgelaufen ist.

10. Verfahren nach einem der vorstehenden Ansprüche, **dadurch gekennzeichnet**, daß die erfolgte Zuweisung einer Möglichkeit zu einem Stellmittel (14, 15) durch erneute Betätigung des Stellmittels (14, 15) oder durch einen entsprechenden Sprachbefehl aufgehoben werden kann.

11. Verfahren nach Anspruch 1 bis 10, **dadurch gekennzeichnet**, daß die erfolgte Zuweisung einer Möglichkeit zu einem Stellmittel (14, 15) durch erneute Betätigung des Stellmittels (14, 15) und gleichzeitiges Aussprechen einer Bezeichnung geändert werden kann, die einer anderen gewünschten aktuell verfügbaren auswählbaren Möglichkeit zugeordnet ist.
